(19) Europäisches Patentamt
European Patent Office
Office européen des brevets

(11) Veröffentlichungsnummer: **0 137 243**
**B1**

# (12) EUROPÄISCHE PATENTSCHRIFT

(45) Veröffentlichungstag der Patentschrift: **23.11.88**

(51) Int. Cl.⁴: **C 09 B 51/00,** D 06 P 1/19, D 06 P 3/32

(21) Anmeldenummer: **84109921.1**

(22) Anmeldetag: **21.08.84**

(54) **Verfahren zur Herstellung von sauren Nitrofarbstoffen.**

(30) Priorität: **27.08.83 DE 3330948**

(43) Veröffentlichungstag der Anmeldung: **17.04.85 Patentblatt 85/16**

(45) Bekanntmachung des Hinweises auf die Patenterteilung: **23.11.88 Patentblatt 88/47**

(84) Benannte Vertragsstaaten: **BE CH DE FR GB IT LI**

(56) Entgegenhaltungen: **FR-A-2 282 456**

(73) Patentinhaber: **HOECHST AKTIENGESELLSCHAFT, Postfach 80 03 20, D-6230 Frankfurt am Main 80 (DE)**

(72) Erfinder: **Hertel, Hasso, Dr., Brunnenweg 10, D-6052 Mühleheim/Main (DE)**

**EP 0 137 243 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

In der Britischen Patentschrift Nr. 1 468 478 sind Farbstoffe beschrieben, die durch Behandlung von Aminonitrodiphenylaminsulfonsäuren mit Braunstein bei einem pH-Wert von über 6 und erhöhter Temperatur erhalten wurden. Sie dienen zum Färben von Leder.

Für das färberische Verhalten von Leder ist nun die Art seiner Gerbung von ausschlaggebender Bedeutung. Die wichtigste Gerbung ist heute die Gerbung mit Chromsalzen - werden doch nach Literaturangaben (bspw. Ullmanns Encyklopädie der technischen Chemie, 4. Auflage, Band 16, S. 120) etwa 80 % des insgesamt hergestellten Leders zumindest anteilig chromgegerbt. Die obengenannten bekannten Farbstoffe geben zwar auf zwischengetrocknetem Chromspaltleder oder auch auf zwischengetrocknetem nachchromiertem, vegetabilisch gegerbtem Leder Färbungen in vollen Tönen, auf frischem Chromleder, wie zum Beispiel Boxcalf, können dagegen nur sehr helle Färbungen erhalten werden. Diese in der Praxis sehr wichtige Lederart läßt sich demzufolge mit den erwähnten bekannten Farbstoffen nicht zufriedenstellend färben.

Es wurde nun gefunden, daß man saure Nitrofarbstoffe mit solch verbessertem Färbevermögen erhält, wenn man die Behandlung der Aminonitrodiphenylamin-sulfonsäuren mit Hypochloriger Säure (Unterchriger Säure) oder ihren Salzen vornimmt. Mit solchen Farbstoffen lassen sich selbst auf frischen Chromnarbenledern volle Töne färben. Gegenüber dem bekannten Verfahren der GB-PS-1 468 478 ergibt sich darüberhinaus der wirtschaftliche Vorteil, daß das verwendete Oxidationsmittel wesentlich billiger ist, und der technische Vorteil, daß wegen der Wasserlöslichkeit des Oxidationsmittel und der Reaktionsprodukte auf eine Klärfiltration vor der Farbstoffisolierung verzichtet werden kann.

Die vorliegende Erfindung betrifft somit ein verbessertes Verfahren zur Herstellung von sauren Nitrofarbstoffen durch Behandlung von Aminonitrodiphenylaminsulfonsäuren mit einem Oxidationsmittel in wäßrigem Medium, das dadurch gekennzeichnet ist, daß man die Umsetzung mit Hypochloriger Säure oder einem ihrer Alkali- oder Erdalkalisalze, oder einer Mischung derselben, als Oxidationsmittel bei einem pH-Wert von größer als 4, vorzugsweise bei einem pH-Wert zwischen 5,5 und 12, und einer Temperatur zwischen 0 und 100° C, vorzugsweise zwischen 20 und 80° C, durchführt, - und ebenso betrifft sie die so erhältlichen sauren Nitrofarbstoffe.

Nach beendeter Reaktion wird das gebildete Farbstoffgemisch durch Sprühtrocknung oder durch Aussalzen und Absaugen isoliert, wobei im letztgenannten Fall die erforderliche Trocknung beispielsweise in einem Warmluftstrom erfolgen kann. Die erhaltenen Farbstoffpulver kann man durch Vermischen mit wasserlöslichen, nicht färbenden Stoffen, z. B. Natriumchlorid, auf eine bestimmte Stärke stellen.

In der Regel wird das erfindungsgemäße Verfahren in der Weise durchgeführt, daß man eine oder mehrere Aminonitrodiphenylaminsulfonsäuren in wäßriger Lösung oder Suspension bei einem pH-Wert größer als 4, vorzugsweise 5,5 bis 12, und einer Temperatur zwischen 0 und 100° C, vorzugsweise zwischen 20 und 80° C, mit Hypochloriger Säure oder einem oder mehreren ihrer Alkali- oder Erdalkalisalze oder mit einer Mischung aus der Hypochlorigen Säure und diesen Hypochloriten umsetzt.

Die Hypochlorige Säure oder ihre Alkali- oder Erdalkalisalze werden bevorzugt in einer Menge von 0,2 bis 3,5 Mol, insbesondere bevorzugt von 0,5 bis 2 Mol pro Mol Aminonitrodiphenylaminsulfonsäure eingesetzt.

Die als Ausgangsverbindungen dienenden Aminonitrodiphenylamin-sulfonsäuren können in den beiden Benzolkernen weitere Substituenten, die für solche Verbindungen zur Herstellung von sauren Nitrofarbstoffen üblich sind, enthalten; solche Substituenten sind vorzugsweise Halogenatome, wie Chlor- und Bromatome, Alkylgruppen, insbesondere von 1 bis 4 C-Atomen, Alkoxygruppen, insbesondere von 1 bis 4 C-Atomen, und Carboxygruppen. Das erfindungsgemäße Verfahren verwendet bevorzugt als solche Ausgangsverbindungen Aminonitrodiphenylamin-sulfonsäuren entsprechend der allgemeinen Formel (1)

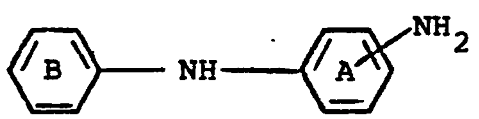

(1)

in welcher die an den Benzolkern A gebundene primäre Aminogruppe in meta- oder para-Stellung zur sekundären Aminogruppe steht, der Benzolkern B durch eine oder zwei Nitrogruppen und eine Sulfogruppe substituiert ist, die in ortho-und para-Stellung zur sekundären Aminogruppe an den Kern B gebunden sind, und in welcher die Benzolkerne A und B noch jeweils zusätzlich durch einen oder zwei, vorzugsweise einen Substituenten substituiert sein können, die aus der Gruppe Halogen, wie Brom und insbesondere Chlor, Alkyl von 1 bis 4 C-Atomen, wie Ethyl und Methyl, Alkoxy von 1 bis 4 C-Atomen, wie Ethoxy und Methoxy, und Carboxy ausgwählt sind. Die primäre Aminogruppe im Benzolkern A steht vorzugsweise in para-Stellung des Diphenylamins.

Aminonitrodiphenylamin-sulfonsäuren sind beispielsweise 4-Amino-4'-nitro-diphenylamin-2'-sulfonsäure, 4-Amino-2'-nitro-diphenylamin-4'sulfonsäure, 4'-dinitro-diphenylamin-6'-sulfonsäure, 4-Amino-2',6'-dinitro-diphenylamin-4-'sulfonsäure, 3-Amino-4'-nitro-diphenylamin-2'-sulfonsäure sowie die in einem der beiden Benzolkerne durch ein Halogenatom, wie Chlor- oder Bromatom, eine Alkylgruppe von

vorzugsweise 1 bis 4 C-Atomen, eine Alkoxygruppe von vorzugsweise 1 bis 4 C-Atomen oder eine Carboxygruppe substituierten Verbindungen.

Hypochlorige Säure ist nur als wäßrige Lösung bekannt. Auch diese ist nur wenig haltbar. Vozugsweise werden deshalb die Alkali- oder Erdalkalisalze der Hypochlorigen Säure verwendet, insbesondere das Kalium-, Natrium- oder Calciumhypochlorit. Zwar ist auch das Kaliumsalz nur in Lösung bekannt, aber auch die Narium- und Calciumhypochlorite werden im allgemeinen in Form einer wäßrigen Lösung verwendet, vorzugsweise als chloridhaltige Lösungen, wie sie bei der Einwirkung von Chlor auf wäßrige Alkali- und Erdalkalihydroxydlösungen als sog. Chlorbleichlauge entstehen. Bevorzugt wird Natriumhypochlorit, insbesondere in Form deren technischen und handelsüblichen Chlorbleichlauge, verwendet. Das Calciumsalz kann man auch als Chlorkalk einsetzen, welcher neben dem Calciumhypochlorit vor allem noch Calciumchlorid und -hydroxid enthällt. Lösungen von Hypochloriten enthalen je nach ihrem pH-Wert gemäß einem chemischen Gleichgewicht noch mehr oder weniger freie hypochlorige Säure, dessen Lage durch den $pK_a$-Wert von 7,6 bestimmt wird. Bei einem pH-Wert von 7,6 - ideale Bedingungen unterstellt - liegen somit gleiche molare Konzentrationen von Hypochloriger Säure und Hypochlorit vor.

Die erfindungsgemäß erhältlichen sauren Nitrofarbstoffe sind im warmen und kalten Wasser sehr gut löslich. Sie eignen sich zum Färber von Leder, insbesondere zum Färben von Chromleder der verschiedensten Herstellungsart, wie zwischengetrocknetem Chromleder, bspw. Chromspaltleder, frischem Chromleder, bspw. Boxcalf- oder Rindboxleder, oder gemischt chrom-vegetabil gegerbtem Leder, wie nachchromiertem vegetabil-vorgegerbtem Schafleder. Auch zum Färben von aluminium- oder zirkongegerbten Leder sind sie gut geeignet. Die erfindungsgemäß erhältlichen Farbstoffe färben die Leder gut ein. Ihre Farbstärke ist im Vergleich zu bekannten Nitrofarbstoffen hoch und ihre Echtheiten, wie bspw. Lichtechtheit, Lickerechtheit, Lösungsmittelechtheit, sind gut. Die Verwendung der Farbstoffe zum Färben von Leder bzw. die Herstellung der Färbungen mit Hilfe dieser Farbstoffe erfolgt in üblicher Weise. Zur Herstellung der Färbungen eignet sich besonders das Färben im Faß. Hierbei wird das Leder nach dem Entsäuren und Aufwalken in einer Flotte bewegt, die den Farbstoff und gegebenfalls eine geringe Menge einer schwachen Base, wie Ammoniak und/oder ein anionisches Tensid enthält. Anschließend wird zur Weichstellung des Leders in üblicher Weise ein Licker zugegeben und nach dessen Einarbeitung das Bad schwach sauer gestellt, wozu üblicherweise Ameisensäure verwendet wird. Es lassen sich jedoch aus Bürst- und Spritzfärbungen herstellen, wofür beispielsweise eine Färbeflotte verwendet wird, die neben dem Farbstoff noch Ammoniak, wie etwa 25 %-igem wäßrigem Ammoniak, ein anionaktives Tensid sowie etwa 10 % Ethanol enthält.

Die nachfolgenden Beispiele dienen zur Erläuterung der Erfindung. Die Teile sind Gewichtsteile und die Prozentangaben beziehen sich auf Gewichtsprozente, sofern nicht anders vermerkt.

**Beispiel 1**

309 Teile 4'-Nitro-4-amino-diphenylamin-2'-sulfonsäure werden mit 2500 Teilen Wasser bei 80° C verrührt. Durch Zugabe von ca. 125 Teilen 32 %-iger wäßriger Natronlauge wird die freie Säure in das Natriumsalz überführt und ein pH-wert von 9,0 eingestellt. Sodann werden 75 Teile Natriumhypochlorit als ca. 18 %-iger wäßrige Lösung gleichmäßig bei einer Temperatur von etwa 80° C innerhalb 5 Stunden eingetropft. Der pH-Wert beginnt anzusteigen, wird jedoch durch Zugabe von einigen Teilen Essigsäure bei einem Wert von 9 gehalten. Es wird eine Stunde lang bei 80° C nachgerührt und der Ansatz anschließend sprügetrocknet.

Man erhält ein Farbstoffpulver, das Leder - auch frisches Chromnarbenleder - in einem vollen, leicht olivstichigen Braunton färbt.

**Beispiel 2**

309 Teile 4'-Nitro-4-amino-diphenylamin-2'-sulfonsäure werden mit 1600 Teilen Wasser verrührt und mit 60,6 Teilen einer wäßrigen 33 %-igen Natronlauge zur Hälfte in das Natriumsalz überführt. Die Temperatur wird auf 75° C gebracht. Es stellt sich ein pH-Wert von 6 ein. Sodann werden bei dieser Temperatur 75 Teile Natriumhypochlorit in wäßriger Lösung innerhalb von 4 Stunden eingetragen. Der pH-Wert verändert sich praktisch nich. Der Ansatz wird noch 2 Stunden bei 75° C weitergerührt und sodann sprühgetrocknet.

Das erhaltene Farbstoffpulver besitzt ähnlich gute färberische Eigenschaften wie das des Beispiels 1; der Farbton ist ein Braunoliv.

**Beispiel 3**

Man arbeitet wie in Beispil 2, gibt aber die Natriumhypochloritlösung rasch (etwa innerhalb von 100 sec) zu. Der pH-Wert steigt dabei auf etwa 8 an, um beim Nachrühren wieder abzufallen. Nach der üblichen Aufarbeitung erhält man ein Farbstoffpulver, das ähnlich gute und vorteilhafte Färbeeigenschaften wie das des Beispiels 1 oder des Beispieles 2 besitzt. Es färbt

Leder in olivbraunen Tönen.

**Beispiel 4**

Man arbeitet wie in Beispiel 1, gibt aber anstelle der Natriumhypochloritlösung die äquivalente Menge einer Kaliumhypochloritlösung zu. Man erhält ein Farbstoffpulver, das die gleichen Färbeeigenschaften wie das des Beispiels 1 besitzt.

**Beispiel 5**

Zu einer 50° C warmen Lösung von 345 Teilen des Natriumsalzes der 4'-Nitro-4-amino-3-methyl-diphenylamin-2'-sulfonsäure in 1600 Teilen Wasser werden innerhalb von 5 Stunden 75 Teile Natriumhypochlorit in Form einer wäßrigen Lösung eingetragen. Der pH-Wert wird durch Zugabe verdünnter Schwefelsäure bei 8,0 gehalten. Die Reaktion ist nach etwa 3 Stunden beendet; die erhalteren Farbstoffe werden sodann bei etwa 40° C mittels Natriumchlorid in einer Menge von etwa 20 Vol.-%, bezogen auf das Volumen des Ansatzes, ausgesalzen. Der ausgefallene Farbstoff wird abgesaugt, getrocknet und gemahlen. Er färbt Leder, insbesondere auch frisches Chromleder, in leicht rotstichigem Mittelbrauntönen.

**Beispiel 6**

309 Teile 4'-Nitro-4-amino-diphenylamin-2'-sulfonsäure werden mit 2200 Teilen Wasser von 85° C verrührt. 60,6 Teile einer 33 %-igen wäßrigen Natronlauge werden zugegeben. Es stellt sich ein pH-Wert von 6 ein. 180 Teile Kaliumhypochlorit in Form einer wäßrigen Lösung werden bei etwa 85° C innerhalb von etwa 5 Stunden eingetragen. Gegen Ende des Zulaufs steigt der pH-Wert auf etwa 7 an. Die Temperatur wird noch zwei Stunden gehalten, der Ansatz sodann abgekühlt und sprühgetrocknet.

Das erhaltene Farbstoffpulver färbt chromgegerbtes Leder in olivbraunen Tönen.

**Beispiel 7**

Man erhält einen Farbstoff mit ähnlich guten Eigenschaften wie der des Belspieles 1, wenn man gemäß den Angaben des Beispieles 1, jedoch bei einer Temperatur von etwa 95° C arbeitet.

**Beispiel 8**

Arbeitet man wie in Beispiel 1 angegeben, verwendet aber statt 4'-Nitro-4-amino-diphenylamin-2'-sulfonsäure die ädiqualente Menge 2'-Nitro-3-amino-diphenylamin-4'-sulfonsäure, so erhält man einen Farbstoff, der Leder, insbesondere auuh frisches chromgegerbtes Leder, in einem sehr gelbstichigen hellen Braun färbt.

**Beispiel 9**

Man arbeitet wie in Beispiel 1, gibt aber die dreifache Menge Natriumhypochlorit zu. Das erhaltene Farbstoffpulver färbt Leder in gelbstichig hellbraunen Tönen.

**Beispiel 10**

309 Teile 4'-Nitro-4-amino-diphenylamin-2'-sulfonsäre werden mit 2400 Teilen Wasser von 20° C verrührt. Durch Zugabe von ca. 125 Teilen einer 32 %-igen wäßrigen Natronlauge wird die freie Säure in das Natriumsalz überführt und ein pH-Wert von 9,0 eingestellt. 37 Teile Natriumhypochlorit in Form einer 20 %-igen wäßrigen Lösung oder als Natriumhypochlorit-Pentahydrat werden innerhalb 5 Stunden eingetragen, wobei die Temperatur bei 20° C und der pH-Wert durch Zugabe von etwa 30 Teilen Natriumhydrogencarbonat bei 9,5 bis 10 gehalten werden. Man rührt den Ansatz etwa 15 Stunden nach und sprühtrocknet ihn anschließend.

Das erhaltene Farbstoffpulver färbt Chromleder in leicht rotstichitig mittelbraunen Tönen.

**Beispiel 11**

309 Teile 4'-Nitro-4-amino-diphenylamin-2'-sulfonsäure werden mit 2500 Teilen Wasser von 20° C verrührt. 188 Teile einer 32 %-igen wäßrigen Natronlauge werden zugegeben; der pH-Wert liegt danach über 12. Man gibt innerhalb von 40 Minuten eine wäßrige Lösung von 75 Teilen Natriumhypochlorit zu, wobei die Temperatur durch gelinde Kühlung bei 20° C gehalten wird. Der Ansatz wird 18 Stunden bei 20° C nachgerührt und sodann sprügetrocknet.

Das erhaltene Farbstoffpulver färbt Leder in gelbbraunen Tönen.

**Beispiel 12**

Man vefährt die in Beispiel 11, verwendet jedoch anstelle der Natriumhypochloritlösung 70

Teile Calciumhypochlorit, bspw. in Form eines 70 %-igen Calciumhypochloritpräparats (entspr. 101 Teile) oder in Form von Chlorkalk, bspw. 192 Teile eines 37 %-igen Chlorkalkes. Man erhält ein Farbstoffpulver von praktisch gleich guter Qualität wie das von Beispiel 11.

**Beispiel 13**

309 Teile 4'-Nitro-4-amino-diphenylamin-2'-sulfonsäure werden, die in Beispiel 10 angegeben, mit Natronlauge gelöst. Durch Zugabe von 72 Teilen Dinatriumphosphat, 53 Teilen Natriumcarbonat und 16 Teilen einer 33 %-igen wäßrigen Natronlauge wird ein pH-Wert von 10,8 eingestellt. Bei etwa 20° C werden 75 Teile Natriumhypochlorit als wäßrige Lösung in 30 Minuten zugegeben, und man läßt die Temperatur innerhalb von etwa vier Stunden auf 35 - 40° C ansteigen; der pH-Wert erhöht sich zunächst bis auf 11,5 und fällt sodann wieder, ab. Man rührt 18 Stunden nach, der End-pH-Wert liegt danach bei 10,5.

Der Ansatz wird in einem Sprühtrockner in ein Farbstoffpulver überführt, das Leder in schönen mittelbraunen Tönen färbt.

**Beispiel 14**

Man arbeitet wie in Beispiel 1 angegeben, setzt aber 3-Chlor-4'-nitro-4-amino-diphenyl-2'-sulfonsäure als Ausgangsverbindung ein.

Das erhaltene Farbstoffpulver färbt Leder in neutralen Brauntönen.

**Beispiel 15**

Man arbeitet wie in Beispiel 2 angegeben, setzt aber 4'-Nitro-4-amino-3-methoxy-diphenylamin-2'-sulfonsäure ein. Der pH-Wert steigt während der Zugabe der Natriumhypochloritlösung von 5,6 auf etwa 9.

Das erhaltene Farbstoffpulver färbt Leder in graubraunen Tönen.

**Beispiel 16**

Man arbeitet wie in Beispiel 1 angegeben, setzt aber 4-chlor-4'-nitro-3-amino-diphenylamin-2'-sulfonsäure als Ausgangsverbindung ein.

Das erhaltene Farbstoffpulver färbt Leder in leicht rotstichigen braunen Tönen.

**Beispiel 17**

Man arbeitet wie in Beispiel 5 angegeben, setzt aber 2',4'-Dinitro-4-amino-diphenylamin-2'-sulfonsäure als Ausgangsverbindung ein.

Das erhaltene Farbstofffpulver färbt Leder in schwach-rot-stichigen braunen Tönen.

**Beispiel 18**

Man arbeitet wie in Beispiel 1 angegeben, setzt aber 4'-Nitro-3-amino-diphenylamin-2'-sulfonsäure ein. Das erhaltene Fabstoffpulvlver färbt Leder in stark grünstichig braunen Tönen.

**Beispiel 19**

Man arbeitet wie in Bleispiel 5 angegeben, setzt aber 2'-Nitro-4-amino-3-methyl-diphenylamin-4'-sulfonsäure ein.

Das erhaltene Farbstoffpulver färbt Leder in rotstichigen Brauntönen.

**Beispiel 20**

309 Teile 4'-Nitro-4-amino-diphenylamin-2'-sulfonsäure weden gemäß Beispiel 10 mit Natronlauge gelöst. Sodann werden 42,4 Teile Natriumcarbonat und 16,8 Teile Natriumhydrogencarbonat eingetragen, wodurch sich der pH-Wert auf 9,9 erhöht. Anschließend läßt man innerhalb von 40 Minuten technische Natronbleichlauge zulaufen in einer Menge, die 93 Teilen Natriumhypochlorit entspricht; hierbei steigt die Temperatur auf etwa 35° C an, und nach anfänglichem Ansteigen des pH-Wertes fällt dieser während des etwa 15-stündigen Nachrührens bei 40° C auf etwa 9,7 ab. Nach Sprühtrocknung des Ansatzes erhält man ein Farbstoffpulver, das Leder in schönen gelbbraunen Tönen färbt.

**Beispiel 21**

Man verfährt gemäß der Verfahrensweise des Beispieles 20, hält jedoch die Reaktionstemperatur bei 20° C statt bei 35 - 40° C. Man erhält ein Farbstoffprodukt, das ebenfalls Leder in gelbbraunen Tönen färbt.

**Beispiel 22**

Man verfährt gemäß der Verfahrensweises des Beispieles 20, setzt jedoch die 1,5-fache Menge sowohl an Natriumcarbonat, an

Natriumhydrogencarbonat als auch an Natronbleichlauge ein. Man erhält ein Farbstoffprodukt, das Leder in ebenfalls schönen gelbbraunen Tönen färbt.

**Beispiel 23**

Man bereitet gemäß Beispiel 10 mittels Natronlauge eine wäßrige Lösung von 309 Teilen 4'-Nitro-4-amino-diphenylamin-2'-sulfonsäure und setzt ihr noch 42 Teile Natriumhydrogencarbonat und 10,6 Teile Natriumcarbonat hinzu. Sodann läßt man innerhalb von zwei Stunden technische Natronbleichlauge hinzulaufen, wobei die Menge der Natronbleichlauge so gewählt wird, daß sie insgesamt 188 Teile Natriumhypochlorit enthält. Die Temperatur steigt auf etwa 35 bis 40° C an; man rührt nach Zugabe der Chlorbleichlauge noch 15 Stunden zur Beendigung der Reaktion ohne Wärmezuführung weiter. Nach Sprühtrocknung des Ansatzes erhält man ein Farbstoffpulver, das Leder in mittelbraunen Tönen färbt.

**Anwendungsbeispiel 1**

Zur Herstellung einer Färbung auf Boxcalf wird wie folgt verfahren: 10 Teile Kalbleder (Falzgewicht), das mit einem handelsüblichen Chromgerbstoff gegerbt wurde, wird man im Faß in einem Bad aus 30 Teilen Wasser, 0,04 Teilen Natriumacetat und 0,04 Teilen Natriumhydrogencarbonat 30 min lang bewegt und entsäuert. Sodann wird es in ein friches Bad eingebracht, das aus 30 Teilen Wasser und 0,05 Teilen eines erfindungsgemäßen sauren Nitrofarbstoffes besteht, und darin 20 min bewegt; danach werden 0,2 Teile eines Öl-Lickergemisches, nach weiteren 30 min 0,02 Teile 85 %-ige wäßrige Ameisensäure zugegeben und das Leder darin weiter bewegt. Nach 30 min wird das Leder herausgenommen, gespült, getrocknet und gestollt. - Die Temperatur der Bäder beträgt jeweils ca. 50° C.

**Anwendungsbeispiel 2**

Zur Herstellung einer Färbung auf Spaltvelour arbeitet man wie folgt: 5 Teile trockenes geschliffenen Chromrindspaltleder werden zum Aufwalken 2 Stunden lang im Faß in einem Bad aus 50 Teilen Wasser, 0,05 Teilen 25 %-igem wäßrigem Ammoniak und 0,04 Teilen Tributylphenyl-nonaglykoläther bewegt. Sodann wird es in ein frisches Bad aus 40 Teilen Wasser, 0,04 Teilen 25 %-igen wäßrigem Ammoniak und 0,125 Teilen eines erfindungsgemäßen Farbstoffes eingebracht und darin 50 min lang bewegt. 0,1 Teile eines Lickers und nach 30 min 0,125 Teile 85 %-ige wäßrige Ameisensäure werden zugegeben, wobei das Leder weiterhin bewegt wird. Es wird nach 30 min herausgenommen, gespült, getrochnet und gestollt. - Die Badtemperatur beträgt jeweils ca. 50° C.

**Anwendungsbeispiel 3**

Zur Herstellung einer Färbung auf vegetabil gegerbtem nachchromiertem Bekleidungsvelourleder wird wie folgt gearbeitet: 5 Teile eines derartigen Leders aus ostindischen Bastarden werden zum Aufwalken 90 min lang in einem Bad aus 50 Teilen Wasser, 0,05 Teilen 25 %-igen wäßrigem Ammoniak und 0,05 Teilen eines Nonylphenolpolyglykoläthers (oder eines ähnlichen nichtionogenen Tensids) im Faß behandelt. Das Bad wird sodann abgelassen und durch ein neues ersetzt, das aus 40 Teilen Wasser und 0,25 Teilen eines erfindungsgemäßen Farbstoffes besteht. Das Leder wird darin 60 min bewegt; sodann werden dem Bad 0,125 Teile eines Licker zugegeben und nach weiteren 30 min 0,25 Teile 85 %-ige wäßrige Ameisensäure nachgesetzt wobei das Leder weiterhin bewegt wird. Nach 30 min wird das Leder herausgenommen, gespült, getrocknet und gestollt. - Die Badtemperatur beträgt jeweils ca. 50° C.

Nach allen Anwendungsbeispielen werden mit dem erfindungsgemäß(en) (erhältlichen) sauren Nitrofarbstoffen kräftige braune Färbungen mit guten Echtheiten erhalten.

**Patentansprüche**

1. Verfahren zur Herstellung von sauren Nitrofarbstoffen durch Behandlung von Aminonitrodiphenylaminsulfonsäuren mit einem Oxidationsmittel in wäßrigem Medium, dadurch gekennzeichnet, daß man als Oxidationsmittel Hypochlorige Säure und/oder eines oder mehrere ihrer Alkali- oder Erdalkalisalze einsetzt und die Umsetzung bei einem pH-Wert von größer als 4 und einer Temperatur zwischen 0 und 100° C durchführt.

2. Verfahren nach Anspruch 1, dadurch gekennzeichnet, daß man die Umsetzung bei einem pH-Wert zwischen 5,5 und 12,0 durchführt.

3. Verfahren nach Anspruch 1 oder 2, dadurch gekennzeichnet, daß man die Hypochlorige Säure oder ihre Salze in einer Menge von 0,2 bis 3,5 Mol pro Mol Aminonitrodiphenylaminsulfonsäure einsetzt.

4. Verfahren nach Anspruch 1, 2 oder 3, dadurch gekennzeichnet, daß die Ausgangs-Aminonitrodiphenylaminosulfonsäuren verbindungen der allgemeinen Formel (1)

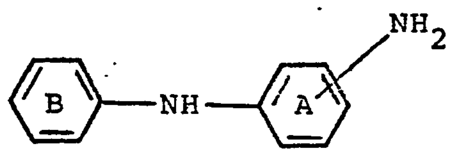

(1)

sind, in welcher die an den Benzolkern A gebundene primäre Aminogruppe in meta- oder para-Stellung zur sekundären Aminogruppe steht und der Benzolkern B durch eine oder zwei Nitrogruppen und eine Sulfogruppe substituiert ist, die in ortho- und para-Stellung zur sekundären Aminogruppe an den Kern B gebunden sind, und in welcher die Benzolkerne und B noch jeweils zusätzlich durch einen oder zwei Substituenten substituiert sein können, die aus der Gruppe Halogen, Alkyl von 1 bis 4 C-Atomen, Alkoxy von 1 bis 4 C-Atomen und Carboxy ausgewählt sind.

5. Verfahren nach einem der Ansprüche 1 bis 3, dadurch gekennzeichnet, daß die Ausgangs-Aminonitrodiphenylaminsulfonsäure die 4-Amino-4'-nitrodiphenylamin-2'-sulfon-säure, 4-Amino-2'-nitrodiphenylamin-4'-sulfonsäure, 3-Amino-2'-nitrodiphenylamin-4'-sulfonsäure oder 3-Amino-4'-nitrodiphenylamin-2'-sulfonsäure oder ein Gemisch von solchen Verbindungen ist.

6. Verfahren nach einem der Ansprüche 1 bis 5, dadurch gekennzeichnet, daß die Ausgangs-Aminonitrodiphenylaminsulfonsäure eine 4-Amino-(nitrodiphenylamin)-sulfonsäure ist.

7. Verfahren nach einem der Ansprüche 1 bis 6, dadurch gekennzeichnet, daß das verwendete Oxidationsmittel Natriumhypochlorit ist.

8. Saure Nitrofarbstoffe, die nach einem Verfahren gemäß einem der Ansprüche 1 bis 7 erhältlich sind.

9. Verwendung der Farbstoffe von Anspruch 8 zum Färben von Leder.

10. Verwendung nach Anspruch 9, dadurch gekennzeichnet, daß das Leder ein frisches Chromleder ist.

11. Verfahren zum Färben von Leder, insbesondere frischem Chromleder, nach welchem man einen Farbstoff aus wäßrigem Medium auf das Leder aufbringt und das Leder nach üblichen Färbemethoden behandelt, dadurch gekennzeichnet, daß der Farbstoff ein Farbstoff von Anspruch 8 ist.

**Claims**

1. A process for preparing acid nitro dyestuffs by treating aminonitrodiphenylaminesulfonic acids with an oxidizing agent in an aqueous medium, which comprises using as the oxidizing agent hypochlorous acid and/or one or more of its alkali metal or alkaline earth metal salts and carrying out the reaction at above pH 4 and at a temperature betueen 0 and 100° C.

2. The process as claimed in claim 1, wherein the reaction is carried out at a pH between 5,5 and 12,0.

3. The process as claimed in claim 1 or 2, wherein the hypochlorous acid or its salts are used in an amount of 0,2 to 3,5 moles per mole of aminonitrodiphenylaminesulfonic acid.

4. The process as claimed in claim 1, 2 or 3, wherein the starting aminonitrodiphenylaminesulfonic acid compounds have the formula (1).

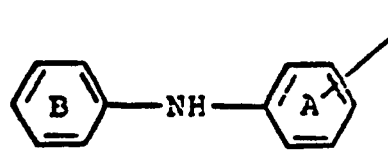

(1)

in which the primary amino group bonded to the benzene ring A is in the meta- or para-position relative to the secondary amino group and the benzene ring B is substituted by one or two nitro groups and a sulfo group which are bonded in ortho- and para-positions relative to the secondary amino group on ring B, and in which the benzene rings A and B can each be additionally substituted by one or two substituents selected from the group consisting of halogen, alkyl of 1 to 4 carbon atoms, alkoxy of 1 to 4 carbon atoms and carboxyl

5. The process as claimed in any one of claims 1 to 3, wherein the starting aminonitrodiphenylaminesulfonic acid is 4-amino-4'-nitrodiphenylamine-2'-sulfonic acid, 4-amino-2'-nitrodiphenylamine-4'-sulfonic acid, 3-amino-2'-nitrodiphenylamine-4'-sulfonic acid or 3-amino-4'-nitrodiphenylamine-2'-sulfonic acid or a mixture of such compounds.

6. The process as claimed in any one of claims 1 to 5, wherein the starting aminonitrodiphenylaminesulfonic acid is a 4-amino-(nitrodiphenylamine)-sulfonic acid.

7. The process as claimed in any one of claims 1 to 6, wherein the oxidizing agent used is sodium hypochlorite.

8. Acid nitro dyestuffs which can be obtained according to a process as claimed in any one of claims 1 to 7.

9. Use of the dyestuffs of claim 8 for dyeing leather.

10. The use as claimed in claim 9, wherein the leather is fresh chrome leather.

11. A process for dyeing leather, in particular fresh chrome leather, by applying a dyestuff to the leather from an aqueous medium and treating the leather by customary dyeing methods, wherein the dyestuff is a dyestuff of claim 8.

**Revendications**

1. Procédé pour la préparation de colorants nitrés acides, par traitement d'acides aminonitrodiphénylaminesulfoniques à l'aide

d'un oxydant en milieu aqueux, caractérisé en ce qu'on utilise comme oxydant de l'acide hypochloreux et/ou un ou plusieurs de ses sels de métaux alcalins ou alcalino-terreux, et que la réaction est mise en oeuvre à un pH supérieur à 4 et à une température comprise entre 0 et 100°C.

2. Procédé selon la revendication 1, caractérisé en ce que la réaction est mise en oeuvre à un pH compris entre 5,5 et 12,0.

3. Procédé selon l'une des revendications 1 ou 2, caractérisé en ce qu'on utilise l'acide hypochloreux ou ses sels en une quantité de 0,2 à 3,5 moles par mole d'acide aminonitrodiphénylaminesulfonique.

4. Procédé selon la revendication 1, 2 ou 3, caractérisé en ce que les acides aminonitrodiphénylaminesulfoniques de départ sont des composés de formule générale (1)

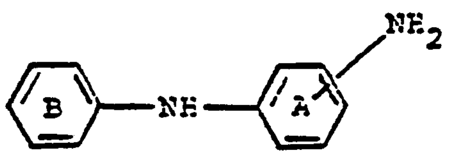

(1)

dans laquelle le groupe amino primaire lié au noyau benzénique A se trouve en position méta ou para par rapport au groupe amino secondaire, et le noyau benzénique B est substitué par un ou deux groupes nitro et un groupe sulfo, qui sont liés au noyau B en position ortho et para par rapport au groupe amino secondaire, et dans laquelle les noyaux benzéniques A et B peuvent encore chacun être substitués par un ou deux substituants choisis dans le groupe comprenant les halogènes, les radicaux alkyle ayant de 1 à 4 atomes de carbone, les radicaux alcoxy ayant de 1 à 4 atomes de carbone et le radical carboxy.

5. Procédé selon l'une des revendications 1 à 3, caractérisé en ce que l'acide aminonitrodiphénylaminesulfonique de départ est l'acide amino-4 nitro-4' diphénylaminesulfonique-2', l'acide amino-4 nitro-2' diphényl-aminesulfonique-4', l'acide amino-3 nitro-2' diphénylaminesulfonique-4' ou l'acide amino-3 nitro-4' diphènylamine-sulfonique-2', ou un mélange de ces composés.

6. Procédé selon l'une des revendications 1 à 5, caractérisé en ce que l'acide aminonitrodiphénylaminesulfonique de départ est un acide amino-4 (nitrodiphénylamine)-sulfonique.

7. Procédé selon l'une des revendications 1 à 6, caractérisé en ce que l'oxydant utilisé est l'hypochlorite de sodium.

8. Colorants nitrés acides, préparés par un procédé selon l'une des revendications 1 à 7.

9. Utilisation des colorants selon la revendication 8 pour la teinture du cuir.

10. Utilisation selon la revendication 9, caractérisée en ce que le cuir est un cuir au chrome frais.

11. Procédé pour la teinture du cuir, en particulier du cuir au chrome frais, selon lequel on applique sur le cuir un colorant en milieu aqueux et on traite le cuir par des techniques de teinture habituelles, caractérisé en ce que le colorant est un colorant selon la revendication 8.